# EUROPEAN PATENT SPECIFICATION

(11) **EP 2 796 377 B1**
(45) Date of publication and mention of the grant of the patent: **06.07.2016**
(21) Application number: 14156988.9
(22) Date of filing: 27.02.2014
(51) Int. Cl.: B65B 35/44, B65B 25/02, B65B 19/34, B65B 25/00, B65B 35/24, B65G 19/10, B65G 47/14, B65G 47/28, B65G 47/34, B65B 1/22, B65B 5/10

(54) **An apparatus and method for packaging firewood, in particular wood for fireplaces**
Einrichtung und Verfahren zum Verpacken von Brennholz, insbesondere Kaminholz
Dispositif et procedee d'emballage de bois de feu, notamment de cheminée

(30) Priority: 05.03.2013 PL 40297713
(43) Date of publication of application: 29.10.2014
(73) Proprietor: TEKNOMET Sp. z o.o., 43-440 Goleszów (PL)
(72) Inventor: Pilch, Piotr, 43-460 Wisla (PL)
(74) Representative: Malcherek, Piotr

(56) References cited:
- DE-A1- 3 511 993
- DE-A1- 4 330 025
- DE-A1-102006 032 919
- ES-A2- 2 084 540
- US-A- 4 031 999

## Description

This invention relates to a device and method for packaging firewood, in particular for fireplaces, used especially for preparation of relatively small trade packages of wood in packaged in limp containers, in particular plastic net bags.

There are large installations for packaging shaped timber and firewood into large units placed on pallets. For example, the patent description DE 10 2006 032 919 A1 discloses a device for transporting and packaging wooden cuboids, wherein said device has a feed conveyor which transports shaped timber pieces one by one and a discharge conveyor. The shaped timber pieces lie on the feed conveyor along their wider side transversely in relation to their length, whereas on the discharge conveyor they lie along its narrow side in an upright position. A loading device is used to change the position of the wooden pieces, wherein said device lifts said wooden cuboids from the wide side and transfers them in an upright position onto the discharge conveyor where they are packaged. This solution cannot be applied for packaging chopped firewood into small trade packages defined by their weight and not shape.

The German invention DE 3511993 discloses a method of sorting and stacking pieces of sawn wood of various shapes and/or various properties. According to this method a mass of sawn wood pieces is sorted depending on their specific properties and each of the sortments is transferred onto a different conveyor. Said conveyors are used as separate, intermediate storage spaces and transported thereby pieces of sawn wood are placed in separate containers according to their shape and/or properties. The pieces sharing most properties are transferred to assigned containers, whereas the miscellaneous pieces are sorted and packaged manually. The sorted pieces of sawn wood of each type are subsequently transferred into a machine which puts them into containers. Said method requires an elaborate system of conveyors, which is usually determined by the limited space of wood processing plants. Furthermore, it must be noted that it is not necessary to sort chopped logs used as firewood according to such strict criteria the main parameter in this case being the length of said logs allowing to insert them in a combustion chamber of a fireplace. Another disadvantage of industrial packaging of firewood is palletized storage of said material in packages of large dimensions suitable for transport by rail. Upon reaching the destination the packages must be unloaded and the wood must be subsequently packaged into retail trade packaging. Most often this work is done manually.

Another German patent description DE 4330025 A1 discloses a sorting device for chopped wood which has a sorting dispenser divided by means of a blocking unit into an area of preliminary storage and a collecting area according to applicable criteria of sorting wood. Said device has an inclined conveyor feeding the wood onto an unloading station where the sorted pieces of wood are gravitationally transferred to appropriate chambers by a transporting device. Each of the chambers is divided by pendulum locking arms into an area of preliminary storage and a collecting area. Inside the chamber there is a horizontally slidable transporting unit which - while sliding down - feeds the sorted wood in bulk collected from the area of preliminary storage onto a further means of transport. The transporting unit may constitute a load-bearing element for the loaded container which is taken by a further means of transport after loading in a part of the collecting chamber. Said device is used when it is necessary to store chopped wood according to predefined criteria or properties, which renders the construction of such device complicated. In the case of firewood for fireplaces which is cut to one size, the length being the main criterion, thus making sorting unnecessary.

The aim of the present invention is to provide a device and method for packaging firewood, in particular for fireplaces which will make it possible to package pieces of chopped wood, whose only determined dimension is the length, entirely mechanically into small containers, in particular into plastic net bags.

The essence of the device according to the invention is that it has an inclined transport conveyor, collecting pieces of chopped wood from a feeder in the form of a drag conveyor whose carrying run consists of a longitudinal guide bar and longitudinal inclined metal sheets mounted thereto on both sides, which forms a trough profile. Inside the longitudinal guide bar there are slidably mounted positive dogs arranged at a distance not smaller than the length of a single, standard piece of chopped wood and mounted to a continuous loop. Under the outlet of the drop basket situated at the outlet of the transport conveyor there is a loading ramp situated transversely to the route of the transport conveyor, wherein said loading ramp has a form of a scraper chain conveyor with sections for chopped wood which are singled out, separated with walls mounted to scrapers. The bottom of the loading ramp has at least two windows, separated along the route and slidingly closed with respective lids, wherein said windows are inlets of the container filling stations. Each of the container filling stations has a supporting plate for a container which is slidably mounted on vertical guide bars of the supporting structure and can move upwards and downwards, and the downward movement of said supporting plate is coupled with tilting flaps dosing into a container pieces of chopped wood fed through the window of the loading ramp. There is a platform with limited horizontal movement mounted on the supporting plate by means of a oscillating mechanism.

A preferred embodiment of the device according to the invention is that a longitudinal axis of the feeder chute by which pieces of chopped wood are fed onto the transport conveyor and a longitudinal axis of the transport conveyor in a projection onto a horizontal plane form an acute angle, approximating 30 degrees, which makes arranging the pieces of chopped wood on the transport conveyor easier. At the same time the axis of the loading ramp with the axis of the longitudinal axis of the transport conveyor in a projection onto a horizontal plane form an approximately right angle.

In a preferred embodiment there is a shield mounted under the route of the transport conveyor, wherein said shield is inclined towards a fall conveyor located next to said transport conveyor. The routes of the transport conveyor and the fall conveyor in side view form a system resembling a letter "V" rotated at an angle of 90 degrees around the tip of its base, wherein after rotating the upper arm of the letter "V" determines the position of the transport conveyor and its lower arm - the position of the fall conveyor, and a delivery end from the fall conveyor onto the transport conveyor is located where the arms meet. Due to practical considerations it is advisable that the delivery end from the fall conveyor onto the transport conveyor be located along the route of the transport conveyor above the feeder chute.

In order to maintain smooth movement of chopped wood supplied from the transport conveyor, the drop basket is equipped with a short belt feeder. It is most preferable that the belt feeder have a rough top belt, which facilitates the downward movement of chopped wood in the drop basket.

It is advisable that the transport conveyor be constructed in such a manner that in the section before the inlet into the drop basket the longitudinal guide bar of said conveyor has no longitudinal metal sheets and above the route there is a pendulum-like drop arm or of periodically rotational motion, wherein said motion is realized within a plane transverse to the longitudinal axis of the transport conveyor directly after each passing dog. In order to facilitate work, the axis of rotation of the drop arm is shifted in relation to the longitudinal axis of the transport conveyor's run towards the side edge thereof.

In order to organize the movement of chopped wood on the route of the transport conveyor the trough-type run of said conveyor has steering panels diagonally mounted to the longitudinal surface of the metal sheets, wherein the taper ratio of said panels is oppositely oriented to the direction of movement of the transport conveyor's dogs.

Furthermore, in a preferred embodiment said dogs resemble a T-bar, whose horizontal shelf protruding above the longitudinal guide bar of the transport conveyor's route is narrower than the clearance between the steering panels.

In such preferred embodiments the steering panels in top view are inclined towards the run at an acute angle in relation to the longitudinal axis of the transport conveyor's run and said angle ranges between 30 and 50 degrees. The facilitated arrangement of chopped wood on the longitudinal guide bar is achieved in particular when the steering panels are inclined in relation to the longitudinal axis of the transport conveyor at an angle approximating 35 degrees in the lower part of said conveyor, whereas in the upper part of said conveyor they are inclined at an angle approximating 40 degrees.

In the most preferred embodiment the loading ramp for each window constituting an inlet of the container filling station has two cooperating lids, wherein first of said lids opens the window by sliding and second lid closes the open window while sliding in the same direction as the first lid. After closing the window both lids are slid back into the home position closing the window of said station. In order to prevent the unwanted consequences of a piece of wood being stuck on the loading ramp the drive of said loading ramp preferably has a torque limiter.

In a preferred embodiment the container filling station in the upper part thereof, directly below the inlets from the loading ramp has external parting metal sheets constituting sliding fastening of rolled, expandable net bags, and said metal sheets also protect the dropping pieces of chopped wood from catching on filaments of the net bags which are the containers being filled.

The simplest solution ensuring oscillating mounting of the platform on the supporting plate of the station is that said supporting plate has a drive with a vertical shaft, wherein a crank with an eccentric protrusion is attached thereto and one end of a connector is fixed to said protrusion and second end of said connector is fixed to the platform. A spring can be used as a connector in this oscillating mechanism and then the supporting plate should have fixed side fenders limiting the platform's travel.

In order to hold the limp container while filling it with pieces of chopped wood it is advisable that the platform have a U-shaped shield leaning thereon, into which enters the container being filled.

The station is more preferably constructed when it has in the lower part thereof a limit switch determining the lowermost position of the container being filled.

The essence of the method according to the invention is that during the forced movement of pieces of chopped wood along the route of the transport conveyor the incorrectly arranged or too long pieces of wood are removed on an ongoing basis, and while the pieces of wood are gravitationally loaded from the loading ramp into a container, said container is moved in an oscillating manner in directions opposite to the longitudinal arrangement of the pieces of wood and said container is simultaneously lowered with the supporting plate supporting it from the bottom.

Preferably the container is lowered stepwise after loading each consecutive piece of wood at a rate appropriate for the volume of the filled container and when the container is lowered to the extreme downward position, the inlet of the station is closed, the filled container is removed and a new container is provided for filling with pieces of chopped wood.

The principal advantage of the method according to the invention is eliminating disturbances while loading pieces of firewood resulting from inappropriate arrangement of pieces of wood on the drag conveyor which makes it impossible for the loading ramp to operate properly. This is achieved both by the steering panels and the drop arm in the final phase of transport, owing to which the inappropriately arranged pieces of wood are dropped on the fall conveyor and transferred back to the transport conveyor without the need to engage an operator. The device itself is constructed in a simple and compact manner and the effectiveness of said device can be regulated by the speed of movement of the transport conveyor dogs and the speed of movement of the loading ramp chain as well as the tilting flaps of the filling station. A preferred embodiment of the container filling station allows for simultaneous preparing of the container for filling while the previous container is being filled. Moreover, owing to the lowered supporting plate and limit switch the station enables adjusting the volume of the plastic net bags to commercial needs. Another advantage of the method and device according to the invention is their independent and automatic operation ensuring high comfort and safety of the operating staff.

The invention is described in more detail in an embodiment in the drawing, where fig. 1 illustrates a simplified spatial view of the firewood packaging device, fig. 2 - the device in top view, fig. 3 - a container filling station including a fragment of the loading ramp in spatial view from the side of supplying and collecting the container, fig. 4 - vertical cross-section of the upper part of the station along the longitudinal axis of the ramp, fig. 5 - view of the mechanism imparting oscillating motion of the filled containers, and fig. 6 - a cross-sectional view of the transport conveyor route.

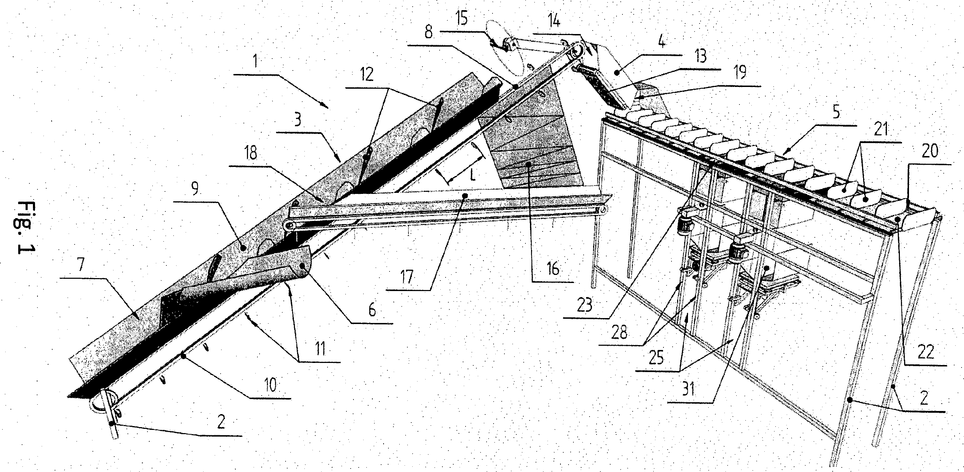

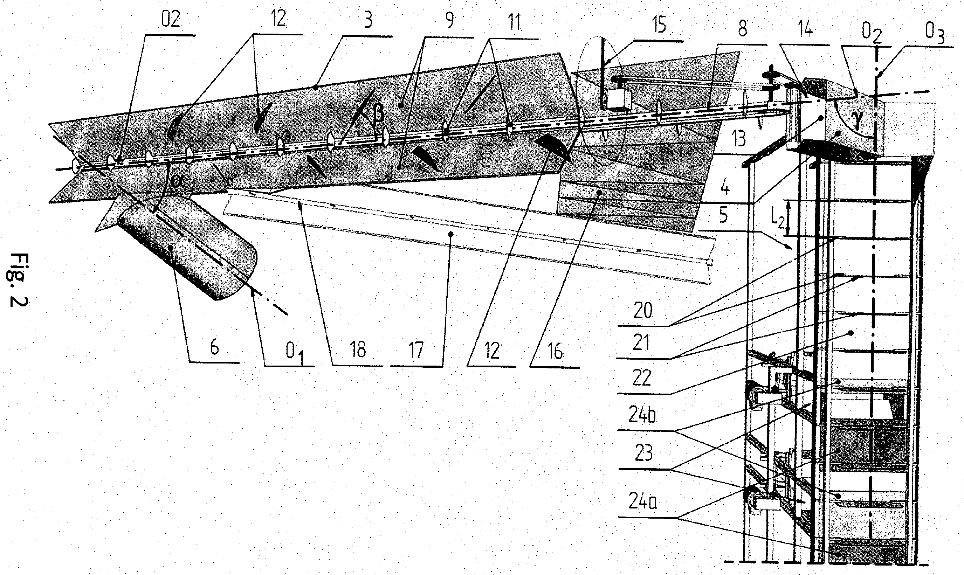

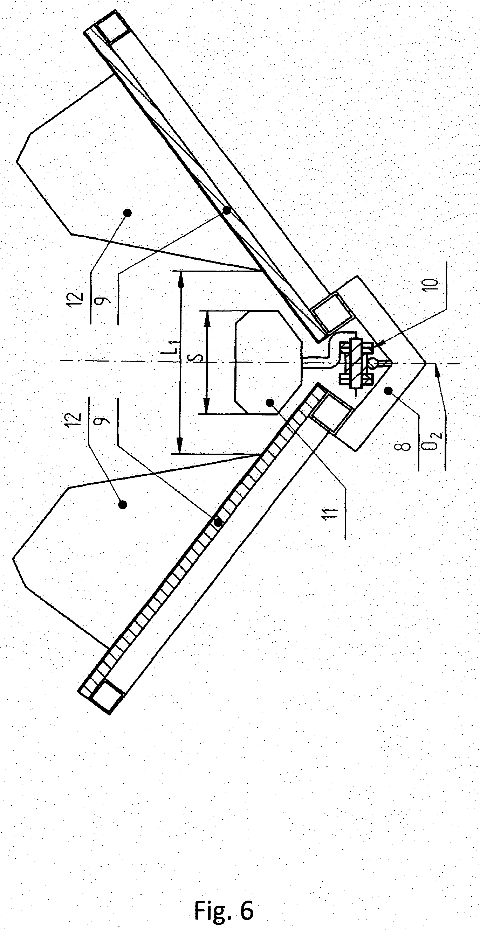

A device 1 for packaging pieces of firewood into limp net bags consists of a rigid structure 2 and a mounted thereto, upward inclined transport conveyor 3, a drop basket 4 and a loading ramp 5 situated below said drop basket 4 (fig.1, fig.2). Pieces of wood are fed from the feeder not shown in the drawing via a chute 6 whose longitudinal axis O₁ in a projection onto a horizontal plane is inclined in relation to a longitudinal axis O₂ of the transport conveyor 3 at an angle α approximating 30 degrees. The transport conveyor 3 is a drag conveyor whose run 7 is formed by a longitudinal guide bar 8 with mounted thereto in an inclined manner longitudinal metal sheets 9. In the run 7 there is a continuous chain 10 with mounted thereto dogs 11 resembling a letter T with the upper shelf protruding above the run 7. The dogs 11 are mutually arranged at an L distance which is not much longer than the standard length of the piece of firewood. On the surface of the longitudinal metal sheets 9 there are alternately arranged steering panels 12 mounted at a β angle in relation to the longitudinal axis O₂ of the transport conveyor 3 approximating 35 degrees. The clearance L₁ (fig.6) between the steering panels 12 exceeds the width S of the dogs 11. In the upper part of the transport conveyor 3 there is a drop basket 4 inside which there is a short belt feeder 13 whose belt has a rough top. Before an inlet 14 to the drop basket 4 the transport conveyor 3 has no longitudinal metal sheets 9 mounted to the longitudinal guide bar 8 and along this section above the longitudinal guide bar 8 there is a drop arm 15 moving in a pendulum manner or of periodically rotational movement with so adjusted moment of passing over the longitudinal guide bar 8 that it immediately follows the movement of each dog 11 passing the station of the drop arm 15. Below the route of the transport conveyor 3 along the section with no longitudinal metal sheets 9 there is an inclined shield 16 with a drag fall conveyor 17 located below said shield 16. In side view of the device 1 the routes of the transport conveyor 3 and the fall conveyor 17 form an arrangement resembling a letter "V" rotated right at an angle of 90 degrees, wherein the upper arm of the letter "V" after rotating determines the position of the transport conveyor 3 and the lower arm - the fall conveyor 17. At the meeting point of these arms there is a delivery end 18 from the fall conveyor 17 onto the transport conveyor 3. The delivery end 18 is located along the route of the transport conveyor 3 above the chute 6 from the firewood feeder. Below the outlet 19 of the drop basket 4 there is a loading ramp 5 whose axis O₃ in a projection onto a horizontal plane is transversely located at an angle γ approximating a right angle in relation to the longitudinal axis O₂ of the transport conveyor 3. The loading ramp 5 is a scraper conveyor whose scrapers 20 have vertical walls 21, wherein the distance L₂ between the adjacent walls 21 slightly exceeds the standard width of the pieces of loaded wood. The drive of the loading ramp 5 has a torque limiter. In the bottom 22 of the loading ramp 5 there are two through windows 23 closed and opened by means of respective lids 24a and 24b.

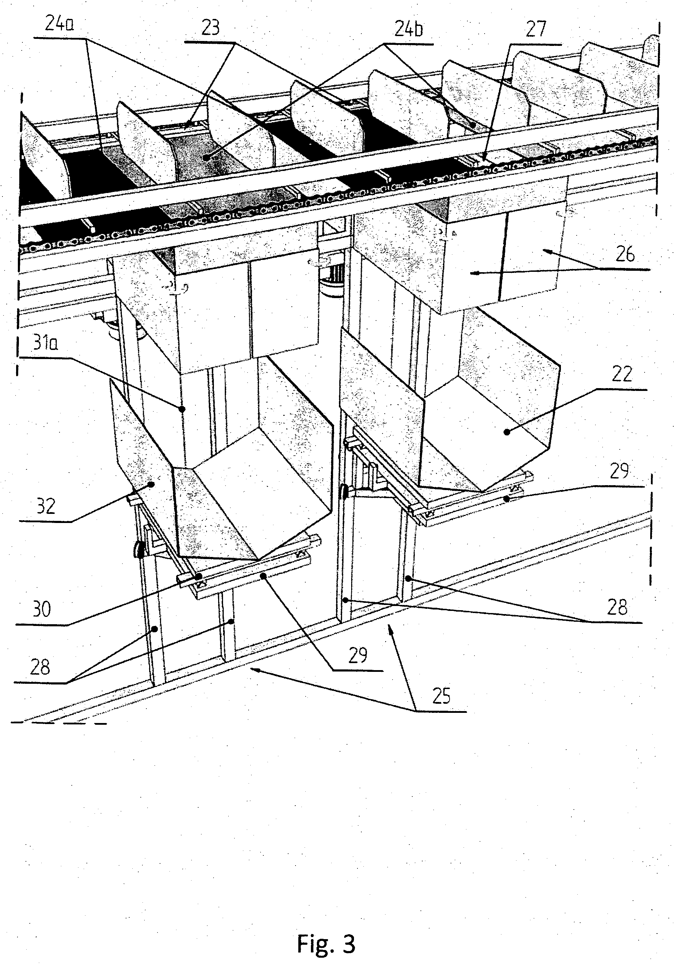

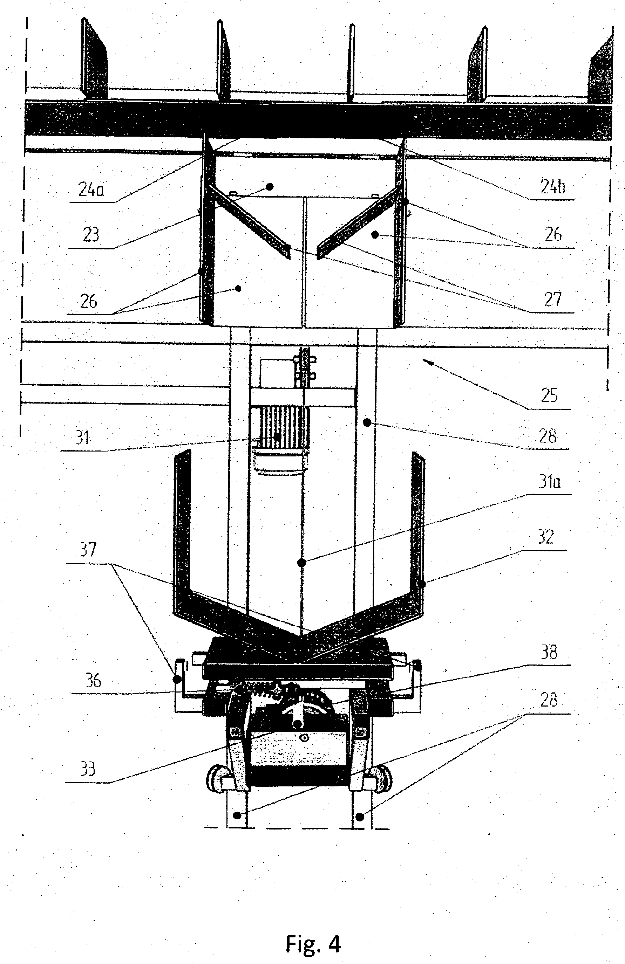

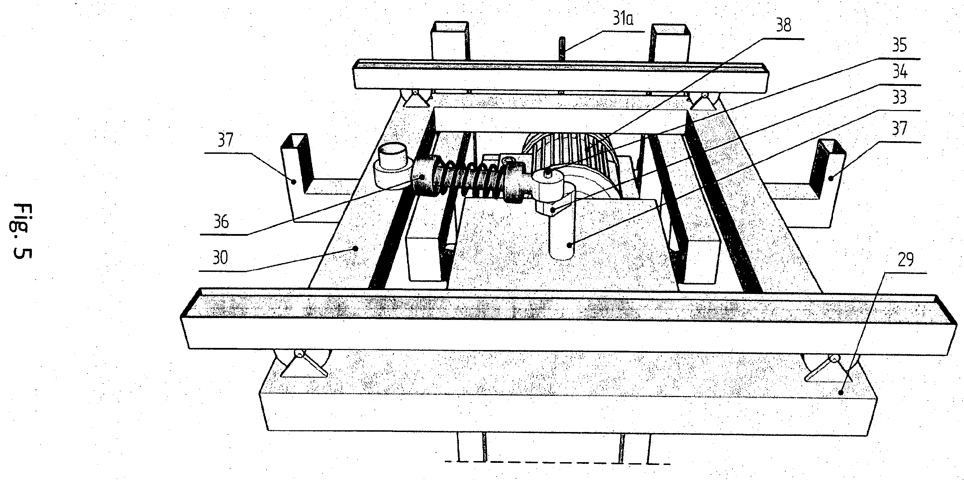

Below each window 23 (fig. 3, fig. 4) there are stations 25 for filling containers with pieces of wood. A single container filling station 25 in the upper part thereof has an external, parting metal sheets 26, which constitute fixing of the flexible filled bag and between said metal sheets 26 there are tilting flaps 27 for directed dropping of each piece of wood into the bag being filled. In the lower part of the station 25 there is a supporting plate 29 slidably mounted on vertical guide bars 28, wherein the upward and downward movement of said supporting plate is actuated by a drive 31 and a cord 31a. Lowering the supporting plate 29 is realized stepwise and is concurrent with opening the tilting flaps 27 dropping pieces of wood into a bag, wherein the rate of lowering the supporting plate 29 is adjusted to the volume of the filled bag. In the lowermost position of the supporting plate 29 the station has a limit switch whose actuation results in closing the window 23 with lids 24a, 24b, which allows for removing the filled bag and providing a new, empty bag. On top of the supporting plate 29 there is a platform 30 with a U-shaped shield 32 for supporting the sides of the bag being filled. The platform 30 is movably mounted to the supporting plate 29, which allows for oscillating sideways in directions transverse in relation to the arrangement of the pieces of wood dropped into the bag. The oscillating motion is realized by means of a drive 38 (fig.5) mounted to the supporting plate 29, on the shaft 33 thereof there is mounted a crank 34 with an eccentric pawl 35 with which a tension member 36 is connected with one end and second end thereof is mounted to the platform 30. Said tension member 36 can be a spring and in that case on both sides the station 25 has fenders 37.

Pieces of chopped wood cut into longitudinal dimension are fed from the feeder, where said wood is cleaned, via a chute 6 onto the transport conveyor 3 where it is transported upward on the run 7 toward the drop basket 4. Owing to the steering panels 12 the pieces of chopped wood falling chaotically from the feeder chute 6 along with the movement of the dogs 11 are arranged with their length along the O₂ axis of the transport conveyor 3, but it is still possible that one dog 11 can take several arranged pieces of chopped wood or longer pieces of chopped wood can come from the feeder 6 and they can protrude above the preceding dog 11 of the transport conveyor. Then piling pieces of wood or pieces of wood on the dogs 11 are dropped by means of the drop arm 15 and via the inclined shield 16 fall onto the fall conveyor 17 which transfers them back and drops them via the loading ramp 18 onto the transport conveyor 3, whereas too long pieces of wood are removed from the fall conveyor 17 outside the device 1. The pieces of wood from the transport conveyor 3 fall into the drop basket 4 and by means of the belt feeder 13 are fed on the loading ramp 5 falling between walls 21 of the scrapers 20 with their longer side parallel to said walls 21. The pieces of wood are moved by means of the scrapers 20 on the bottom 22 to the nearest open window 23 of the operating station 25 and through said window 23 they fall stopping on the tilting flaps 27 which open and close every time, owing to which the falling of the pieces of wood into a container is a smooth process. The external parting metal sheets 26 are used not only for holding the bag, but also to protect the bag from catching ends of the pieces of wood which would lead to uneven arrangement of said pieces of wood in the bag. Each cycle of opening the tilting flaps 27 leads to stepwise lowering of the supporting plate 29, which enables further loading of pieces of wood with a relatively short fall. Together with lowering of the supporting plate 29 during filling the bag, the platform 30 moves sideways in an oscillating manner, and said platform 30 is on the supporting plate 29, and said motion is realised by means of an eccentric mechanism driven by a drive 38. Said motion enables complete filling of the bags without leaving empty spaces within. After actuation of the limit switch the window 23 is closed, which makes it possible to remove the filled bag from the station 25 and installing a new one. While removing the filled bag, the pieces of wood are transported on the window 23 with closed lids 24a, 24b to the second station 25 where the window 23 is open and another bag is simultaneously being filled at the second station 25. Opening the window 23 and closing said window 23 is carried out in phases (fig. 4). First the lid 24a is slid, thus the window 23 is opened and stays open until a bag is completely filled. After a bag has been filled the window 23 is closed by means of the lid 24b slid towards the lid 24a. After sliding, both lids 24a, 24b both slide to the home position thus closing the window 23. The cycle of opening and closing the window 23 is repeated periodically.

## Claims

1. A device /1/ for packaging firewood, especially for fireplaces, on whose rigid supporting structure /2/ is a diagonally upward mounted transport conveyor /3/ for wood, having in its lower part a feeder for pieces of chopped wood with a chute /6/, and in the upper part thereof there is a drop basket /4/, whose outlet is oriented downwards above a loading ramp /5/ located below, having stations for filling containers with pieces of wood, wherein single station /25/ for filling containers has in its upper part tilting flaps /27/, and in its lower part a supporting plate /29/ slidably vertically mounted, on which a container is supported while being filled and top of said container is fixed to the structure of the station, **characterised in that** the inclined transport conveyor /3/, receiving the pieces of chopped wood from the feeder /6/ is a drag conveyor whose run /7/ is formed by a longitudinal guide bar /8/ and mounted thereto inclined longitudinal metal sheets /9/, and within the longitudinal guide bar /8/ there are slidably mounted positive dogs /11/ arranged at a mutual distance /L/ fixed to a continuous loop /10/, and below the outlet /19/ of the drop basket /4/ there is a loading ramp /5/ transverse to the route of the transport conveyor /3/, and said loading ramp /5/ is a chain conveyor with separated by walls /21/ mounted to scrapers /20/ compartments for pieces of chopped wood, the bottom /22/ of which has at least two windows /23/, situated at a distance from each other, slidingly closed with respective lids /24a, 24b/, and said windows /23/ are inlets of the stations /25/ for filling containers with pieces of chopped wood, and the supporting plate /29/ of each station /25/ slidably vertically mounted on vertical guide bars /28/ is coupled with tilting flaps /27/, and on the supporting plate /29/ there is mounted a platform /30/ whose motion in the horizontal plane is limited and said platform /30/ is connected with the supporting plate /29/ by means of an oscillating mechanism /38, 33, 34, 35, 36/.

2. The device according to claim 1 **characterised in that** a longitudinal axis /O₁/ of the feeder chute /6/ and a longitudinal axis /O₂/ of the transport conveyor /3/ transporting chopped wooden pieces in a projection onto a horizontal plane form an acute angle /α/, approximating 30 degrees, whereas the axis /O₃/ of the loading ramp /5/ with the longitudinal axis /O₂/ of the transport conveyor /3/ in a projection onto a horizontal plane form an angle /γ/ approximating a right angle.

3. The device according to claim 1 or 2, **characterised in that** below the route of the transport conveyor /3/ has a mounted shield /16/ inclined towards a fall conveyor /17/ arranged next to said conveyor /3/, and the routes of the transport conveyor /3/ and the fall conveyor /17/ form in a side view an arrangement resembling a letter V rotated by 90 degrees around the top of its base, wherein-after rotating-the upper arm of the letter V determines the position of the transport conveyor /3/, and the lower arm - the position of the fall conveyor /17/, and where the arms meet there is a delivery end /18/ from the fall conveyor /17/ onto the transport conveyor /3/, and the delivery end /18/ from the fall conveyor /17/ onto the transport conveyor /3/ is on the route of the transport conveyor /3/ above the feeder chute /6/.

4. The device according to claim 1 or 2 **characterised in that** the drop basket /4/ has a belt feeder /13/ which has belt with a rough top.

5. The device according to claim 1 or 2, **characterised in that** along the section before an inlet /14/ to the drop basket /4/ the longitudinal guide bar /8/ of the transport conveyor /3/ has no longitudinal metal sheets /9/, and above there is a drop arm /15/ of pendulum-like motion carried out within a plane transverse to the longitudinal axis /O₂/ of the run /7/ of the transport conveyor /3/ directly after each dog /11/, wherein rotational axis /O₄/ of the drop arm /15/ is shifted in relation to the longitudinal axis /O₂/ of the run/7/ toward the side edge thereof.

6. The device according to claim 1, **characterised in that** the trough-like run /7/ of the transport conveyor /3/ has a diagonally mounted in relation to surface of the longitudinal metal sheets /9/ steering panels /12/, wherein the taper ratio of said steering panels is oppositely oriented to the direction of movement of the dogs /11/ of the transport conveyor/3/.

7. The device according to claim 6, **characterised in that** the dogs /11/ in front view resemble a T-bar, the horizontal shelf thereof protruding above the longitudinal guide bar /8/ has a width /S/ narrower than the clearance /L₁/ between the steering panels /12/.

8. The device according to claim 6 or 7, **characterised in that** the steering panels /12/ in top view are inclined towards the run /7/ at an acute angle /β/ in relation to the longitudinal axis /O₂/ of the run /7/ ranging between 30 degrees and 50 degrees, and preferably in the lower part of the transport conveyor /3/ the steering panels /12/ are inclined towards the longitudinal axis /O₂/ at an angle approximating 35 degrees, and in the upper part of the transport conveyor /3/ said steering panels /12/ are inclined at an angle /β/ approximating 40 degrees.

9. The device according to claim 1, **characterised in that** the loading ramp /5/ for each window /23/ which is an inlet to the container filling station /25/ has two lids /24a, 24b/, wherein first of said lids /24a/ opens the window /23/, and second lid /24b/ closes the window /23/, and after closing the window /23/ both lids /24a, 24b/ are slid together into the home position, closing the window /23/ of the station /25/, and the loading ramp /5/ has a scraper drive equipped with a torque limiter.

10. The device according to claim 1, **characterised in that** each station /25/ has in the upper part thereof external parting metal sheets /26/ which constitute fastening of the rolled expandable containers preventing the dropping pieces of chopped wood from catching on filaments of the net bags which are the containers being filled.

11. The device according to claim 1 or 10, **characterised in that** the supporting plate /29/ of the station /25/ has a drive /38/ with a crank /34/ mounted on a shaft /33/, and there is a connector /36/ mounted to an eccentric protrusion /35/ of said crank /34/, and the second end of said connector /36/ is mounted to the platform /30/, and said connector /36/ is a spring, and the supporting plate /29/ has fixed fenders /37/ on the sides.

12. The device according to claim 10, **characterised in that** in the lower part of the station /25/ the platform /30/ thereof has a U-shaped shield /32 /, into which enters the filled container.

13. The device according to claim 1, **characterised in that** the station /25/ for filling containers has in the lower part thereof a limit switch determining the lowermost position of the filled container.

14. A method of packaging firewood, in particular for fireplaces, according to which pieces of wood chopped into the same and/or similar longitudinal dimension are fed onto a transport conveyor /3/ and transported thereby to a drop basket /4/, from which uniformly oriented pieces of wood are put on a located below loading ramp /5/, having stations /25/ for filling provided thereon containers, which constitute packaging of a commercial portion of firewood, **characterised in that** during forced movement of pieces of chopped wood along the route of the transport conveyor /3/ misarranged or too long pieces of chopped wood are removed on an ongoing basis, and during gravitational loading of pieces of wood from the loading ramp /5/ into one of the containers, the container being filled is put into oscillating motion of directions opposite to the longitudinal arrangement of the pieces of wood and while being filled said container is moved downward along with a supporting plate /29/ supporting said container from the bottom.

15. The method according to claim 14, **characterised in that** after loading each consecutive piece of chopped wood the container is dropped stepwise at a rate appropriate for the volume of the container being filled, and when said container has reached the extreme downward position an inlet of the station /25/ is closed, the filled container is removed and replaced with a new container.

## Patentansprüche

1. Verpackungsmaschine /1/ für Brennholz, vor allem Kaminholz, mit der starren Stützkonstruktion /2/, auf der schräg nach oben Förderer /3/ montiert ist. Der Förderer besitzt Holzaufgabevorrichtung mit einer schiefen Rutsche /3/ in ihrem unterem Teil, in dem oberen Teil dagegen einen Fallkorb /4/, der mit seiner Mündung an die sich unter ihm befindende Rampe /5/ gerichtet ist. Die Rampe besitzt getrennte Stelle zur Ladung der Behälter mit den Holzscheiten, wobei hat die einzelne Stelle /25/ zur Ladung der Behälter in ihrem oberen Teil die aufklappbaren Klappen /27/ und unten eine Stützplatte /29/ die längst verschiebbar montiert ist. Auf dieser Platte stützt sich der geladene Behälter, der von oben an die Stellekonstruktion befestigt ist, wobei es ist hier charakteristisch, dass der schräge Förderer /3/, welche die Holzscheiten aus der Aufgabevorrichtung /6/ abnimmt, die Form einer Förderanlage mit Treibern, derer Band /7/ der Führungsschiene entlang platziert ist, hat. An die Führungsschiene ist das schräge, längliche Blech befestigt. Die längliche Führungsschiene besitzt dagegen verschiebbar förmige Mitnehmer /11/, die in einer Entfernung /L/ voneinander gelegt sind und an den Trum /10/ ohne Ende befestigt sind, unter der Mündung /19/ des Fallkorbes /4/ dagegen ist eine Rampe /5/ quer zu dem Lauf des Förderers /3/ platziert. Die Rampe /5/ hat die Form von Kettenförderer mit den mittels Wänden /21/ voneinander getrennten und an den Hechelkämmen /22/ befestigten Abteilungen für Holzscheiten. Die Bodenplatte des Kettenförderers ist in mindestens zwei, voneinander getrennten, mittels angehörigen Deckel /24a, 24b/ verschiebbar schließende Fenster /23/ ausgerüstet.
Diese Fenster dienen als Eingänge der Stellen /25/, an denen die Behälter mit den Holzscheiten gefüllt werden, wobei ist die Stützplatte /29/ jeder Stelle /25/ verschiebbar in Richtung oben - unten auf den vertikalen Führungsschienen /28/ eingesetzt und beweglich mit den aufklappbaren Klappen /27/ gekoppelt, wobei ist auf der Stützplatte /29/ mit begrenzten Bewegungsmöglichkeiten in horizontaler Ebene eine Plattform /30/ eingesetzt, sie ist mit der Stützplatte /29/ mittels Schwingmechanismus /38, 33, 34, 35, 36/ verbunden.

2. Anlage gemäß Anspruchs 1, charakteristisch dadurch, dass die Längsachse /O1/ der Rutsche /6/ aus der Aufgabevorrichtung und die Längsachse /O2/ des Förderers /3/, der die Holzscheiten im Riss auf die vertikale Ebene transportiert, einen spitzen Winkel /α/ von ca. 30° bilden, dagegen bildet die Achse /O3/ der Rampe /5/ im Riss auf die vertikale Ebene mit der Längsachse /O2/ des /3/ einen fast rechten Winkel /γ/.

3. Anlage gemäß Anspruchs 1 oder 2, charakteristisch dadurch, dass sie unter dem Weg des Förderers /3/ ein Gehäuse /16/ eingebildet hat. Das Gehäuse ist in die Richtung des ihm nah gelegten Fallförderers /17/ geneigt, wobei bilden die Wege des Förderers /3/ und Fallförderers von der Seitenschicht eine Form, die der um 90° gedrehten Buchstabe V ähnelt, wo - nach dem Drehen - der obere Arm der Buchstabe V die Stelle des Förderers /3/ zeigt, und der untere Arm - Stelle des Fallförderers /17/ und an der Schnittstelle dieser Ärmer Bandübergabe /18/ aus dem Förderer /17/ auf den Fallförderer /3/, wobei ist die Bandübergabe 18/ aus dem Fallförderer /17/ auf den Förderer /3/ auf dem Weg des Förderers über der Rutsche aus der Aufgabevorrichtung platziert.

4. Anlage gemäß Anspruchs 1 oder 2, charakteristisch dadurch, dass der Fallkorb /4/ in einen Bandförderer /13/ ausgestattet ist. Der Bandförderer besitzt das Band mit der rauer Struktur der Hülle.

5. Anlage gemäß Anspruchs 1 oder 2, charakteristisch dadurch, dass auf der Strecke vor dem Eingang /14/ zum Fallkorb /4/ die Längsführungsschien /8/ des Förderer /3/ kein Längsblech /9/ besitzt, und über ihr ein Fallarm /15/ mit Pendelbewegung befestigt ist. Die Pendelbewegung läuft in der Querebene zu Längsachse /O2/ des Förderbandes /7/ des Förderers /3/, und passiert direkt nach jedem Mitnehmer /11/, wobei ist der Fallarm /15/ der Drehachse /O4/ in Bezug auf die Längsachse /O2/ des Förderbandes in die Richtung seines Seitenrandes geschoben.

6. Anlage gemäß Anspruchs 1, charakteristisch dadurch, dass das beckenförmige Band /7/ des Förderers in die Führungsflächen /12/ ausgerüstet. Die Führungsflächen /12/ sind schräg zu den Flächen des Längsblechs /9/ befestigt und ihre Konvergenz ist in Gegenrichtung der Mitnehmer /11/ des Förderers /3/ gerichtet.

7. Anlage gemäß Anspruchs 6, charakteristisch dadurch, dass die Mitnehmer /11/ in der Frontalschicht dem T-Träger ähneln, dessen unteres Fach über die Längsführungsschiene /8/ heraussteht und die Breite /S/ kleiner als Bodenfreiheit /L1/ zwischen den Führungsflächen ist.

8. Anlage gemäß Anspruchs 6 oder 7, charakteristisch dadurch, dass die Führungsfläche /12/ in der oberen Sicht auf das Band unter dem spitzen Winkel /β/ zur Längsachse /O2/ des Bands /7/ aus dem Umfang von 30° bis 50° geneigt ist, und in dem unteren Teil des Förderers /3/ die Führungsflächen /12/ zu der Längsachse /O2/ unter dem Winkel von ca. 35° günstig geneigt sind, und in dem oberen Teil des Förderers /3/ unter dem Winkel /β/ von ca. 40° geneigt sind.

9. Anlage gemäß Anspruchs 1, charakteristisch dadurch, dass die Rampe /5/ für jedes Fenster /23/, dass der Eingang zur Stelle /25/ zur Ladung der Bächer zwei Deckel /24a, 24b/ besitzt, der erste Deckel /24a/ öffnet das Fenster /23/, und der zweite Deckel /24b/ schließt das geöffnete Fenster /23/, wobei sind die beiden Deckel /24a, 24b/ gemeinsam an die Eingangsstelle, die das Fenster /23/ der Stelle /25/ schließt, geschoben, nachdem das Fenster geschlossen wurde, die Rampe /5/ dagegen hat den Antrieb der Hechelkämmen, der in eine Zahnkupplung ausgestattet ist.

10. Anlage gemäß Anspruchs 1., charakteristisch dadurch, dass jede Stelle /25/ in dem oberen Teil sich öffnendes Außenblech /26/ hat. Dieses Blech bildet Befestigung der zusammengerollten elastischen Behälter und schützt davor, dass die Holzscheiteten an Faser dieser Behälter hängen bleiben.

11. Anlage gemäß Anspruchs 1 oder 10, charakteristisch dadurch, dass die Stützplatte /29/ der Stelle /25/ in den Antrieb /38/ mit der auf der Welle /33/ befestigten Kurbel /34/ ausgerüstet ist. An den exzentrischen Überbau der Kurbel ist eine Verbindung /36/ befestigt. Diese Verbindung /36/ ist aus dem anderen Ende der Plattform befestigt und hat die Form einer Feder und an der Seiten hat die Stützplatte /29/ feste Anschlagleisten /37/.

12. Anlage gemäß Anspruchs 10, charakteristisch dadurch, dass in dem unteren Teil des Stelle /25/ ihre Stelle /30/ in ein U-förmiges Gehäuse /32/ ausgerüstet ist, zu dem der geladene Behälter reingeht.

13. Anlage gemäß Anspruchs 1, charakteristisch dadurch, dass die Stelle /25/ zur Ladung des Behälters in ihrem unteren Teil ein Endschalter besitzt, der die niedrigste Stelle des geladenen Behälters zeigt.

14. Verpackungsart des Brennholzes, vor allem des Kaminholzes, gemäß der die in dieselbe und/oder ähnliche Größe geschnittene Holzscheiten auf den Förderer /3/ gefördert werden und in den Fallkorb /4/ transportiert werden. Aus dem Fallkorb /4/ gleich gerichtete Holzscheiten an den unter ihm platzierte Rampe /5/ gefördert werden. Die Rampe ist in Stellen /25/ zur Ladung der an ihnen gelegten Behälter ausgerüstet. Die Behälter bilden die Verpackung der Verkaufseinheit der Holzscheiten, charakteristisch dadurch, dass es im Laufenden die falsch gelegten oder zu große Holzscheiten beseitigt werden, während sie des Fördererwegs entlang gezwungen verlagert werden, und beim Gravitationsladen der Holzscheiten aus der Rampe /5/ zum Behälter wird der zu geladene Behälter in Schwingbewegung mit der Gegenrichtung zu der Längsrichtung der Holzscheiten gesetzt und gleichzeitig im Laufe des Ladens wird der Behälter nach unten samt der ihn von unten stützenden Stützplatte /29/ gesenkt.

15. Art gemäß Anspruchs 14, charakteristisch dadurch, dass der Behälter sprunghaft nach dem Laden jeder Holzscheiten um die an das Volumen des zu beladenden Behälters angepasste Größe gesenkt wird. Nachdem der Behälter um die vorausgesetze Größe gesenkt wird, schließt sich der Stelleneingang /25/ und der geladene Behälter wird weggenommen und ein neuer gestellt.

## Revendications

1. Dispositif /1/ de conditionnement du bois de chauffage, en particulier de cheminée dans lequel la structure du support /2/ rigide est monté oblique en haut un convoyeur de transport /3/ du bois, équipé à la partie inférieure d'un dispositif d'alimentation de bûches avec une glissière /6/ inclinée et à la partie supérieure d'un trémie /4/, dont la sortie est dirigée vers le bas au-dessus du quai de chargement /5/ localisé dessous, ayant des stations séparées pour remplissage de récipients des bûches, pendant que la station /25/ unique pour le remplissage de récipients possède à la partie supérieure des trappes /27/ inclinables et à la partie inférieure une plaque de support /29/ montées de manière mobile dans le sens vertical sur laquelle est supporté un récipient plein monté par le dessus à la construction de la station **caractérisée en ce que** le convoyeur de transport /3/ incliné qui recoit des bûches du dispositif d'alimentation /6/ est sous la forme du transporteur à raclettes dont la piste /7/ est formée avec un guide /8/ longitudinal et les tôles /9/ longitudinales fixées à lui et dans le guide /8/ longitudinal sont disposées des raclettes /11/ profilées et glissantes ensemencées entre elles dans la distance /L/ montées au brin /10/ sans fin, pendant que sous la sortie /19/ du trémie /4/, en travers le trajet du convoyeur de transport /3/ est situé un quai de chargement /5/ ayant la forme d'un transporteur à chaîne comportant les singularisées et séparées l'une de l'autre à l'aide des parois /21/ fixés aux raclettes /20/ par des compartiments pour des bûches dont le font /22/ est équipé d'au moins deux espacés et fermés coulissants par l'appartenant les capots /24a, 24b/ des fenêtres /23/ étant les sorties de stations /25/ pour le remplissages de bûches des récipients, pendant que la plaque de support /29/ de chaque station /25/ montée coulissant dans les directions haut-bas sur les guides /28/ verticaux est accouplée aux trappes /27/ inclinables pendant que sur la plaque de support /29/ est montée avec une liberté limitée de mouvement dans le plan horizontal une plate-forme /30/ reliée à la plaque de support /29/ à l'aide d'un mécanisme d'oscillation /38, 33, 34, 35, 36/.

2. Dispositif selon la revendication 1, **caractérisée en ce que** l'axe longitudinal /O1/ de la glissière /6/ du dispositif d'alimentation et l'axe longitudinal /O2/ du convoyeur de transport /3/ qui transporte de bûches dans la projection sur le plan horizontal définissent l'angle /α/ aigue proche de 30°, tandis que l'axe /O3/ du quai de chargement /5/ dans la projection sur la plan horizontal définit avec l'axe longitudinal /O2/ du convoyeur de transport /3/ l'angle /y/ proche du droit.

3. Dispositif selon la revendication 1 ou 2, **caractérisée en ce que** sous le trajet du convoyeur de transport /3/ a un couvercle /16/ fixe incliné vers disposé à côté de lui le convoyeur de chute /17/, tandis que les trajets du convoyeur de transport /3/ et du convoyeur de chute /17/ forment en vue de côté un systeme ressemblant à une lettre V inversée de 90° degrés autour du sommet de sa base, où après l'inversion - le bras supérieur de la lettre V détermine la position du convoyeur de transport /3/, et le bras inférieur - la position du convoyeur de chute /17/ et dans le point commun de ces bras est situé la fin /18/ du convoyeur de chute /17/ sur le convoyeur de transpost /3/, où la fin/18/ du convoyeur de chute /17/ sur le convoyeur de transpost /3/ est localisé sur le trajet du convoyeur de transport /3/ au-dessus de la glissière /6/ du dispositif d'alimentation.

4. Dispositif selon la revendication 1 ou 2, **caractérisée en ce que** le trémie /4/ est équipé d'un transporteur à bande /13/ qui a une bande d'une structure rugueuse.

5. Dispositif selon la revendication 1 ou 2, **caractérisée en ce que** sur le segment avant la sortie /14/ du trémie /4/, le guide longitudinal /8/ du convoyeur de transport /3/ n'a pas de longitudinales tôles /9/ et au dessus de lui est monté un bras de chute /15/ avec un mouvement pendulaire, exécuté dans le plan transversal à l'axe longitudinal /O2/ du piste /7/ du convoyeur de transport /3/, effectué directement après chaque raclette /11/ pendant que le bras de chute /15/ a un axe de rotation /O4/ décalé par rapport à l'axe longitudinal /O2/ du piste /7/ vers son bord latéral.

6. Dispositif selon la revendication 1, **caractérisée en ce que** la piste /7/ en forme d'auge du convoyeur de transpor /3/ est équipée d'un fixé obliquement par rapport à la surface des tôles /9/ longitudinales les panneaux de direction /12/ dont la convergence est orientée opposée à la direction du mouvement des raclettes /11/ du convoyeur de transport /3/.

7. Dispositif selon la revendication 6, **caractérisée en ce que** les raclettes /11/ dans la vue frontale ont la forme d'un profilé en T dont le plateau hirizontal en saillie sur le guide /8/ longitudinal a une largeur inférieure à l'écart / L1 / entre les panneaux de direction /12/.

8. Dispositif selon la revendication 6 ou 7, **caractérisée en ce que** les panneaux de direction /12/ sont inclinés en vue de dessus sur la piste /7/ à un angle /β/ aigu avec l'axe longitudinal /O2/ de la piste /7/ compirs entre 30° et 50° et de préférence à la partie inférieure du convoyeur de transport /3/ les panneaux de direction /12/ sont inclinés à l'axe longitudinal /O2/ à l'angle près de 35° et à la partie supérieure du convoyeur de transport /3/ sont inclinés à l'angle /β/ près de 40°.

9. Dispositif selon la revendication 1, **caractérisée en ce que** le quai de chargement /5/ pour chaque fenêtre /23/ étant la sotrie de la station /25/ pour remplissage des récipients a deux capots /24a, 24b/, dont le premier capot /24a/ ouvrt la fenêtre /23/ et l'autre capot /24b/ ferme la fenêtre /23/ ouverte pendant qu'après la fermeture de la fenêtre /23/ les deux capots /24a, 24b/ sont déplacés ensemble à la position de départ qui ferme la fenêtre /23/ de la station /25/ par contre le quai de chargement /5/ possède un entraînement de raclettes équipé du limiteur de couple.

10. Dispositif selon la revendication 1, **caractérisée en ce que** chaque station /25/ à la partie supérieure possède des plaques /26/ inclinables à extérieur étant la fixation de flexibles récipients enroulés, qui empêchent l'accrochage des bûches aux fibres de ces récipients.

11. Dispositif selon la revendication 1 ou 10, **caractérisée en ce que** la plaque de support /29/ de la station /25/ est équpiée d'un entraînement /38/ avec la manivelle /34/ montée à l'arbre /33/ à l'excentrique saillie /35/ à laquelle est monté un raccord /36/ fixé à l'autre extrémité de la plate-forme /30/, par contre le raccord /36/ a la forme d'un ressort et les côtés de la plaque de support /29/ ont les protections /37/ fixées.

12. Dispositif selon la revendication 10, **caractérisée en ce qu'**à la partie inférieure de la station /25/ le plate-fomre /30/ est équpée d'un bouclier /32/ en forme de U dans lequel entre un récipient chargé.

13. Dispositif selon la revendication 1, **caractérisée en ce qu'**une station /25/ pour le remplisage de récipient a à la partie inférieure interrupteur de cours définissant la position la plus basse du récipient chargé.

14. Procédé de conditionnement du bois de chauffage, en particulier de cheminée selon lequel découpées dans la même et /ou similaire dimension longitudinale des bûches sont introduites sur le convoyeur de transport /3/ et sont transporées dans le trémie /4/ à partir duquel les bûches orientées de manière uniforme sont mises sur le quai de chargement /5/ localisé ci-dessus, équipé de stations /25/ pour remplisage des récipients situés ci-dessus étant l'emballage de paquet commercial des bûches **caractérisée en ce que** pendant le déplacement forcé des bûches au long du trajet de convoyeur de transport /3/ les bûches mal placées et trop longues sont éliminées automatiquement, et pendant le chargement de la gravité les bûches du quai de chargement /5/ au récipient, le récipient chargé est mis en mouvement oscillant de sens contraire de la disposition longitudinale des bûches et simultanément au chagrement, le récipient est abaissé avec l'appuit du font de la plaque de support /29/.

15. Procédé selon la revendication 14, **caractérisée en ce qu'**un récipient est abaissée pas à pas après le chargement de chaque bûche successive en une quantité choisie en fonction de la capacité du récipient chargé et après avoir atteint la position extrême à la baisse préconçue l'entrée de la station /25/ ferme, récipient chargé est retiré et un nouveau récipient est introduit.
